# EUROPÄISCHE PATENTSCHRIFT

(11) **EP 2 064 040 B1**
(45) Veröffentlichungstag und Bekanntmachung des Hinweises auf die Patenterteilung: **30.05.2012**
(21) Anmeldenummer: 07786119.3
(22) Anmeldetag: 17.07.2007
(51) Int. Cl.: B67D 1/08, B29B 17/00, B30B 9/32

(54) **VERFAHREN UND VORRICHTUNG ZUR REDUZIERUNG DES VOLUMENS VON EINWEG-BEHÄLTERN**
METHOD AND APPARATUS FOR REDUCING THE VOLUME OF DISPOSABLE CONTAINERS
PROCÉDÉ ET DISPOSITIF PERMETTANT DE RÉDUIRE LE VOLUME DE RÉCIPIENTS NON CONSIGNÉS

(30) Priorität: 24.07.2006 DE 102006034638
(43) Veröffentlichungstag der Anmeldung: 03.06.2009
(73) Patentinhaber: KHS GmbH, 44143 Dortmund (DE)
(72) Erfinder: MONZEL, Alois, 67591 Mörstadt (DE); STIENEN, Thomas, 59425 Unna (DE)
(86) Internationale Anmeldenummer: PCT/EP2007/006319
(87) Internationale Veröffentlichungsnummer: WO 2008/012009

(56) Entgegenhaltungen:
- WO-A-2005/032789
- DE-A1- 10 138 365
- DE-A1- 19 730 720
- DE-U1-202006 000 865
- JP-A- 10 329 138
- JP-A- 2000 005 729
- JP-A- 2002 126 898
- JP-A- 2002 172 493

## Beschreibung

Die Erfindung betrifft ein Verfahren zur Reduzierung des Volumens von Einweg-Behältern, insbesondere Einweg-Getränkebehältern, wonach eine Unterdruckeinrichtung an eine Öffnung des Einweg-Behälters angeschlossen wird und den Einweg-Behälter zu selner Volumenreduzierung evakuiert.

Einweg-Behälter in Form von Einweg-Kegs werden beispielhaft in der DE 101 38 365 A1 beschrieben und dienen allgemein zur Bevorratung von Lebensmitteln und fassen insbesondere Bier. Im Vergleich zu den bisher bekannten Kegs aus beispielsweise Aluminium oder Stahl, bestehen solche Einweg-Kegs überwiegend aus Kunststoff und werden nur einmalig gefüllt und dann entsorgt.

Im Gegensatz dazu werden die herkömmlichen Kegs aus Aluminium oder Edelstahl im Mehrwegverfahren mehrfach gefüllt, gereinigt und wieder verwendet. Das setzt eine umfangreiche Logistik und aufwendige Reinigungamaßnahmen voraus. Insbesondere der Rücktransport ist teuer, weil die herkömmlichen Kegs aus Aluminium oder Stahl jeweils ein großes Volumen auf einer Ladefläche einnehmen. Folglich stellen Einweg-Kegs eine Fortentwicklung dar, weil sie weder gereinigt noch rücktransportiert werden müssen, sondern vielmehr vor Ort entsorgt werden können.

Bisher hat man Einweg-Kegs meistens von Hand In Ihrem Volumen verkleinert oder andere Maßnahmen ergriffen, um das Müllaufkommen zu verringern. Solche Probleme sind in der Vergangenheit jedoch nur am Rande aufgetreten, weil Einweg-Kegs bisher keine große Verbreitung gefunden haben. In Zukunft ist jedoch mit einem vermehrten Einsatz zu rechnen, so dass adäquate Vorgehenswelsen zur Reduzierung des Müllvolumens benötigt werden.

Bekannt sind aber auch Verfahren und Vorrichtungen zur Reduzierung des Volumens von Einwegbehältern oder Einweg-Kegs aus Kunststoff durch Beaufschlagung mit Unterdruck (DE-A- 19730720 A1, JP 10329138 A, JP 2000005729 A, JP 2002172493 A, JP 2002126898 A, WO 2005032789), über ein mit einer Unterdruckeinrichtung verbundenes Anschlussstück, welches eventuell über ein Zwischenstück an die Öffnung des jeweiligen Einweg-Behälters angeschlossen wird und über welches der Einweg-Bahälters zu seiner Volumenreduzierung evakuiert wird. Die verwendeten Anschlussstücke sind ausschließlich für die Vorrichtungen nur zur Reduzierung des Volumens von Einweg-Behältern konzipiert.

Der Erfindung liegt das technische Problem zugrunde, ein Verfahren zur Reduzierung des Volumens von Einweg-Behältern so weiter zu entwickeln, dass die Volumenverringerung einfach, schnell und kostengünstig vonstatten geht. Außerdem soll das Verfahren universell eingesetzt werden können.

Zur Lösung dieser technischen Problemstellung ist bei einem gattungsgemäßen Verfahren vorgesehen, dass das Anschlussstück ein Zapfkopf ist, der auch zur Abgabe des flüssigen Lebensmittels aus den Einweg-Behälter während eines Zapfbetriebes verwendbar ist.

Mit Hilfe des auswechselbaren Adapterzwischenstückes wird die Möglichkeit eröffnet, ganz unterschiedliche Einweg-Behälter mit ein und derselben Unterdruckeinrichtung beaufschlagen zu können. Tatsächlich sorgt das Adapterzwischenstück in der Regel zusammen mit einem Anschlussstück für den Verschluss der Öffnung des betreffenden Einweg-Behälters. Dadurch können Anschlussstück, gegebenenfalls Zuleitung und Unterdruckeinrichtung als Einheit unverändert bleiben und sorgt lediglich das Adapterzwischenstück für die jeweilige Anpassung an den zu evakulerenden Einweg-Behälter. In diesem Zusammenhang hat es sich bewährt, wenn das auswechselbare Adapterzwischenstück zusammen mit dem Anschlussstück an einem Flansch in der Öffnung des Einweg-Behälters angeschlossen wird.

Dabei kann das Adapterzwischenstück mittels einer Kupplung, respektive Schnellkupplung, auswechselbar mit dem Anschlussstück und/oder dem Flansch verbunden sein. In jedem Fall trägt das Adapterzwischenstück unterschiedlichen Öffnungen und/oder Flanschen in der jeweiligen Öffnung des Einweg-Behälters Rechnung, indem das Adapterzwischenstück den Übergang von der jeweils unterschiedlich gestalteten Öffnung oder des variierenden Flansches hin zu dem gleich bleibenden Anschlussstück sicherstellt.

Diese Vorgehenswelse ist besonders für Einweg-Getränkebehälter und hier Einweg-Kegs von besonderer Bedeutung. Denn diese Einweg-Kegs sind meistens an ihrer Öffnung brauerelspezifisch gestaltet, um in den, häufig vertragsgebundenen Gaststätten einen Verkauf von Produkten anderer Getränkehersteller oder -anbieter sicher auszuschließen. Mit Hilfe des auswechselbaren Adapterzwischenstückes können nun die verschiedenen Öffnungen und/oder Flansche an den Öffnungen jeweils an ein und dasselbe Anschlusestück inklusive der Unterdruckeinrichtung angeschlossen werden, so dass die Einheit aus Anschlussstück, gegebenenfalls Zuleitung und Unterdruckeinrichtung sorten- und produktübergrelfend Verwendung findet. Das gilt selbst dann, wenn in den fraglichen Einweg-Behältern nicht beispielsweise Bier, sondern Wein, Säfte oder andere Softdrinks oder allgemein Lebensmittel abgefüllt und versand werden.

Es hat sich bewährt, wenn die Öffnung des Einweg-Behälters nach seiner Evakuierung verschlossen wird. Das kann beispielsweise durch eine Membran, eine Siegelfolie, allgemein eine Folie oder auch einen Schraub- oder Bajonettverschluss erfolgen. Dadurch wird sichergestellt, dass der evakuierte Einweg-Behälter seine flache und meist tellerartige Gestalt für die anschließende Entsorgung beibehält und somit das kleinstmögliche Müllvolumen definiert. Dabei meint der Begriff Evakuierung im Rahmen der Erfindung, dass das Innere des in seinem Volumen zu reduzierenden Einweg-Behälters auf einen im Vergleich zum äußeren Umgebungsdruck (deutlich) niedrigeren Unterdruck gebracht wird. Als Folge hiervon drückt der (größere) äußere Umgebungsdruck den regelmäßig aus einem faltbaren bzw. elastischen Kunststoffmaterial hergestellten Einweg-Behälter zusammen, so dass dieser am Ende der beschriebenen Prozedur eine nahezu scheibenartige Form mit erheblich reduziertem Volumen einnimmt.

Um den Vorgang der Evakuierung zu steuern und gegebenenfalls zu überwachen, ist vorteilhaft ein Sensor vorgesehen, welcher im Bereich der Öffnung des Einweg-Behälters angeordnet werden kann. Mit Hilfe des Sensors wird der im Einweg-Behälter vorhandene (Unter-) Druck gemessen. Je nach den Messergebnissen steuert der Sensor die Unterdruckeinrichtung. Beispielsweise ist es denkbar, die Unterdruckeinrichtung so lange zu beaufschlagen, bis ein gewisser und vorgegebener (Unter-) Druck in dem fraglichen Einweg-Behälter vorliegt. Es kann aber auch eine Zeitsteuerung vorgesehen werden, und zwar in der Weise, dass die Unterdruckeinrichtung für einen bestimmten Zeitraum beaufschlagt wird, um den nötigen Unterdruck im Innern des Einweg-Behälters aufzubauen. Meistens ist der Sensor an eine Steueranlage angeschlossen, welche nach Maßgabe von Sensorsignalen bzw. Messsignalen die Unterdruckeinrichtung entsprechend beaufschlagt, wie es einleitend beschrieben wurde.

Gegenstand der Erfindung ist auch eine Vorrichtung zur Reduzierung des Volumens von Einweg-Behältern, insbesondere von Einweg-Getränkebehältern, wie Einweg-Kegs oder dergleichen. Die betreffende Vorrichtung eignet sich zur Durchführung des beschriebenen Verfahrens, ist hierauf allerdings nicht beschränkt. Ferner stellt die Erfindung ab auf die Verwendung einer Unterdruckeinrichtung zur Evakuierung der betreffenden Einweg-Kegs. Dabei kann - muss aber nicht - die Unterdruckeinrichtung mit dem Anschlussstück und dem auswechselbaren Adapterzwischenstück ausgerüstet werden.

Im Ergebnis werden ein Verfahren und eine Vorrichtung beschrieben, mit deren Hilfe sich das Müllvolumen von Einweg-Behältern deutlich reduzieren lässt, und zwar für eine Vielzahl solcher Einweg-Behälter. Denn die Erfindung greift auf ein auswechselbares Adapterzwischenstück zurück, welches die Verbindung eines mit der Unterdruckeinrichtung verbundenen und standardisierten Anschlussstückes mit dem jeweils individuellen Einweg-Behälter sicherstellt. Ferner sorgt die nach der Evakuierung vorgenommene optionale Versiegelung der Öffnung dafür, dass das erreichte minimale Müllvolumen beibehalten wird. Hierin sind die wesentlichen Vorteile zu sehen.

Im Folgenden wird die Erfindung an einer lediglich ein Ausführungsbeispiel darstellenden Zeichnung näher erläutert; es zeigen:
- **Fig. 1**: einen Einweg-Behälter in Gestalt eines Einweg-Kegs mit zugehörigem Flansch in seiner Öffnung,
- **Fig. 2**: den Flansch im Querschnitt,
- **Fig. 3**: ein Anschlussstück inklusive zugehörigem, auswechselbarem Adapterzwischenstück und
- **Fig. 4**: die gesamte Vorrichtung zur Reduzierung des Volumens des Einweg-Behälters nach Fig. 1 schematisch.
- **Fig. 5**: eine abgewandelte Ausführungsform der Gestaltung nach Fig. 3 und
- **Fig. 6**: eine weitere Variante der Vorrichtung.

In den Figuren ist eine Vorrichtung dargestellt, mit deren Hilfe das Volumen von Einweg-Behältern 1, im Ausführungsbeispiel von Einweg-Kegs 1, reduziert wird. Das fragliche Einweg-Keg 1 verfügt über einen Mantel aus einem elastischen und faltbaren Kunststoff ausreichender Materialstärke, um im Innern flüssige Lebensmittel, wie insbesondere Bier, aufnehmen zu können. Das Einweg-Keg 1 lässt sich durch einen Kunststoffblasformvorgang herstellen und nimmt im gefüllten Zustand die Gestalt eines angenähert zylindrischen Druckbeutels ein.

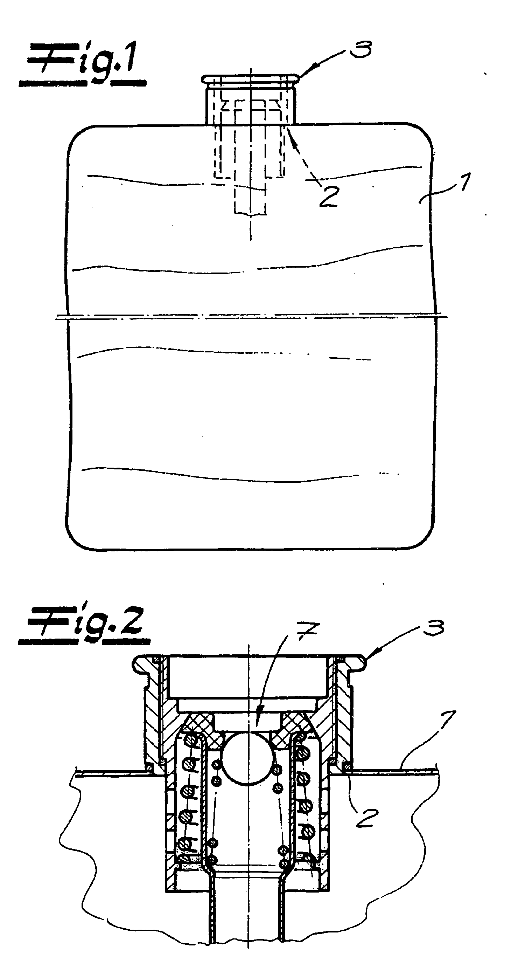

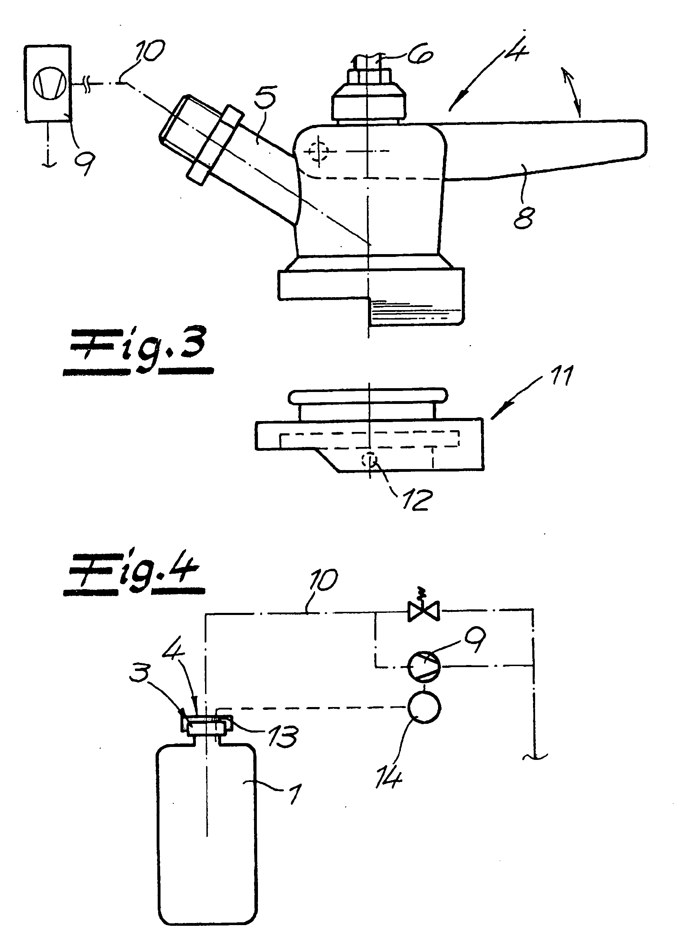

Eine Öffnung 2 des Einweg-Kegs 1 ist mit einem in den Fig. 2 und 3 zu erkennenden Flansch 3 bzw. einem entsprechenden Fitting ausgerüstet. Mit dem Flansch 3 lässt sich ein in der Fig. 3 im Detail dargestelltes Anschlussstück 4 verbinden, bei dem es sich im Rahmen des Ausführungsbeispiels um einen (Vakuum-) Zapfkopf oder eine vergleichbare Einrichtung handelt. Mit Hilfe dieses Zapfkopfes bzw. Anschlussstückes 4 kann das im Innern des Einweg-Kegs 1 befindliche Lebensmittel herausgedrückt werden. Zu diesem Zweck verfügt das Anschlussstück 4 über eine Anschlussmuffe 5, an die eine Gasquelle, beispielsweise CO₂-Quelle, angeschlossen werden kann. Mit Hilfe dieser Gasquelle wird das Innere des Einweg-Kegs 1 unter Druck gesetzt, so dass das flüssige Lebensmittel über ein Rohr 6 des Anschlussstückes 4 das Einweg-Keg 1 verlässt. Hierzu ist es erforderlich, dass ein Ventil 7 kopfseitig des Flansches 3 mit Hilfe eines Hebels 8 an dem Anschlussstück 4 heruntergedrückt bzw. geöffnet wird.

Tatsächlich beaufschlagt der besagte Hebel 8 im bzw. am Anschlussstück 4 einen nicht dargestellten Stift im Anschlussstück 4, welcher seinerseits das Ventil 7 öffnet, sobald der Hebel 8 heruntergedrückt wird. Durch den an der Anschlussmuffe 5 anstehenden Druck der Gasquelle wird nun das flüssige Lebensmittel über das Rohr 6 des Anschlussstückes 4 nach außen gedrückt. In den Fig. 1 und 2 ist doch angedeutet, dass das fragliche Rohr 6 mit einem unterseitigen und in die Flüssigkeit eintauchenden weiteren Rohr flüssigkeitstechnisch verbunden ist, so dass die beschriebene Entleerung des Einweg-Kegs 1 über das Anschlussstück 4 stattfindet.

Nachdem das Einweg-Keg 1 mit Hilfe des unter Überdruck stehenden CO₂-Gases leer gedrückt worden ist, muss das Einweg-Keg 1 entsorgt werden. Dazu wird das Anschlussstück 4 bzw. dessen Anschlussmuffe 5 mit einer Unterdruckeinrichtung 9 verbunden und folglich der Innenraum des Einweg-Kegs 1 evakuiert. Die Anschlussmuffe 5 und ebenso das Anschlussstück 4 übernehmen also eine zweifache Funktion, einerseits zur Entleerung der im Einweg-Keg 1 vorhandenen Flüssigkeit und andererseits, um das Einweg-Keg 1 für seine Entsorgung zu evakuieren.

Bei der Unterdruckeinrichtung 9 kann es sich um eine kleine Vakuumpumpe handeln, die direkt für die Verbindung mit der Anschlussmuffe 5 vorbereitet ist bzw. über eine Zuleitung 10 mit der Anschlussmuffe 5 in Verbindung steht. Denkbar ist es auch, dass das Anschlussstück 4 und die Unterdruckeinrichtung 9 eine Baueinheit bilden, weil die Unterdruckeinrichtung 9 direkt an die Anschlussmuffe 5 angeflanscht ist.

Von besonderer Bedeutung für die Erfindung ist nun der Umstand, dass das Anschlussstück 4 mit Hilfe eines auswechselbaren Adapterzwischenstückes 11 an den Flansch bzw. das Fitting 3 in der Öffnung 2 des Einweg-Kegs 1 angeflanscht ist. Dabei stellt das Adapterzwischenstück 11 insgesamt sicher, dass die fragliche Unterdruckeinrichtung 9 dichtend mit der besagten Öffnung 2 kommuniziert bzw. an die Öffnung 2 angeschlossen ist.

Insgesamt sorgt das auswechselbare Adapterzwischenstück 11 zusammen mit dem Anschlussstück 4 für den dichten Verschluss der Öffnung 2. Für die Lebensmittel- bzw. Getränkeentnahme aus dem Einweg-Keg 1 und dessen Evakuierung zur Reduzierung seines Volumens wird auf ein und dasselbe Anschlussstück 4 zurückgegriffen, welches unter Zwischenschaltung des auswechselbaren Adapterzwischenstückes 11 eine dichte Verbindung mit der Öffnung 2 des Einweg-Kegs 1 eingeht.

Weil mit Hilfe des auswechselbaren Adapterzwischenstückes 11 unterschiedlich gestaltete Öffnungen und/oder Öffnungsquerschnitte der Öffnung 2 beherrscht werden können, ermöglicht die Erfindung den Rückgriff auf ein standardisiertes Anschlussstück 4 inklusive ebenfalls standardisierter Unterdruckeinrichtung 9. Eine Anpassung erfolgt lediglich durch Austausch des jeweiligen Adapterzwischenstückes 11, welches verwechslungssicher an die Gestalt des Flansches 3 an der Öffnung 2 des Einweg-Kegs 1 angepasst ist.

Um den Austausch des auswechselbaren Zwischenstückes 11 zu gewährleisten, mag dieses mit einer angedeuteten Kupplung 12 respektive Schnellkupplung ausgerüstet sein. Im Übrigen sieht die Erfindung vor, dass das fragliche Adapterzwischenstück 11 einerseits an das Anschlussstück 4 und andererseits an den Flansch 3 jeweils lösbar angeschlossen ist. In jedem Fall sorgt die Unterdruckeinrichtung 9 dafür, dass das Einweg-Keg 1 nach seiner Entleerung evakuiert wird und sich folglich - wie beschrieben - aufgrund des äußeren Luftdruckes und in Folge seiner Forminstabilität zusammenzieht. Im Idealfall bildet das Einweg-Keg 1 für die anschließende Müllentsorgung eine flache Scheibe, die einfach gehandhabt, gelagert und zu geringen Kosten entsorgt werden kann.

Anhand der Fig. 4 erkennt man, dass im Bereich der Öffnung 2 des Einweg-Kegs 1 ein Sensor 13 vorhanden ist. Dieser Sensor 13 ragt in das Innere des Einweg-Kegs 1 und misst dort den im Einweg-Keg 1 vorhandenen Unterdruck. Im Rahmen des Ausführungsbeispiels und nicht einschränkend ist der fragliche Sensor 13 in das jeweilige Anschlussstück 4 integriert, weil das Anschlussstück 4 als standardisiertes Bauteil für jedwede Anwendungen beibehalten wird. Der Sensor 13 ist an eine Steueranlage 14 angeschlossen, welche seine Sensorsignale bzw. Messwerte erfasst und auswertet. Tatsächlich beaufschlagt die Steueranlage 19 nach Maßgabe der Sensorsignale, die Unterdruckeinrichtung 9 entsprechend und ist zu diesem Zweck mit der Unterdruckeinrichtung 9 elektrisch verbunden.

Denkbar ist es hier, dass mit Hilfe der Steueranlage 14 ein bestimmter Unterdruck im Innern des Einweg-Kegs 1 vorgegeben und dann im Sinne einer Regelung mit Hilfe der Unterdruckeinrichtung 9 eingestellt wird. Dabei liegt es ergänzend selbstverständlich im Rahmen der Erfindung, je nach Beschaffenheit des zu evakuierenden Einweg-Kegs 1 mit unterschiedlichen Unterdruckwerten zu arbeiten. Gleichzeitig oder alternativ kann mit Hilfe der Steueranlage 14 auch die Dauer der Beaufschlagung des Einweg-Kegs 1 mit Hilfe der Unterdruckeinrichtung 9 vorgegeben werden.

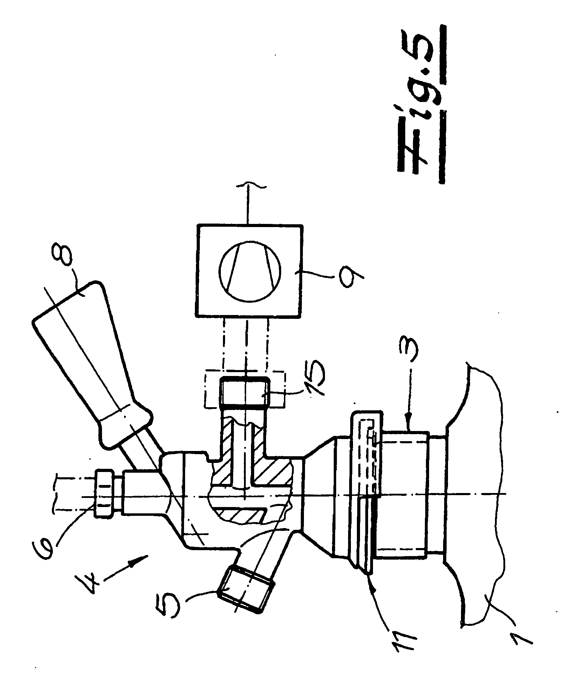

In der Fig. 5 ist eine Variante der Ausführungsform nach Fig. 3 vereinfacht dargestellt. Man erkennt das Anschlussstück bzw. den Zapfkopf 4, welcher über die Anschlussmuffe 5 mit Druck von der externen Gasquelle beaufschlagt werden kann, um die im Innern des Einweg-Kegs 1 vorhandene Flüssigkeit herauszudrücken. Zusätzlich zu dieser Anschlussmuffe 5 und dem ebenfalls realisierten Hebel 8 ist nun noch eine weitere Anschlussmuffe 15 vorgesehen, an die die Unterdruckeinrichtung 9 beispielsweise unmittelbar angeflanscht ist. In diesem Fall formen das Anschlussstück 4 und die Unterdruckeinrichtung 9 - gegebenenfalls in Verbindung mit dem auswechselbaren Adapterzwischenstück 11 - eine Baueinheit, die unmittelbar und als Ganzes als Verschluss für die Öffnung 2 des Einweg-Kegs 1 dient. Es liegt aber ebenfalls im Rahmen der vorliegenden Erfindung, wenn die am Zapfkopf 4 angeordnete Anschlussmuffe 15 und die Unterdruckeinrichtung 9 mittels einer flexiblen, nicht dargestellten weiteren Leitung verbunden sind.

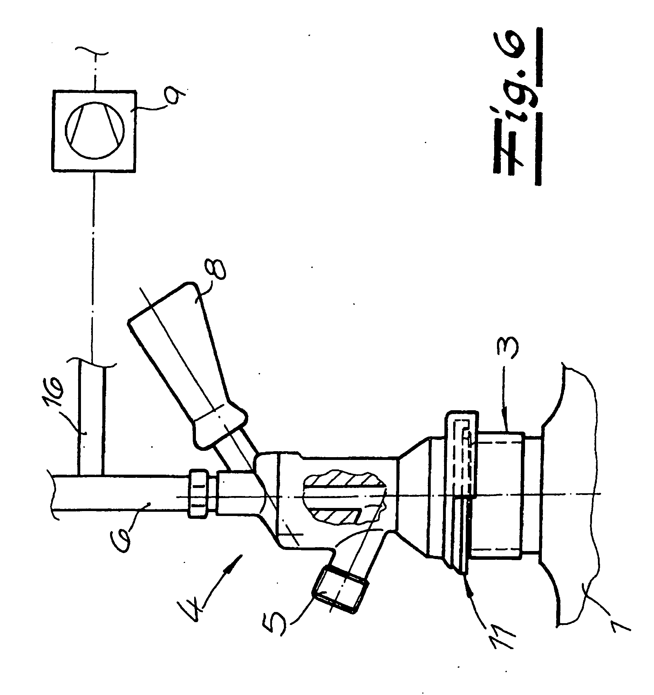

Im Rahmen der Variante nach Fig. 6 ist eine weitere Anbringungsmöglichkeit bzw. Beaufschlagungsvariante mit der Unterdruckeinrichtung 9 dargestellt. Denn hier ist die Unterdruckeinrichtung 9 an das Rohr 6 des Anschlussstückes 4 über beispielsweise einen Abzweig 16 angeschlossen. Das heißt, die Unterdruckeinrichtung 9 lässt sich einerseits mit der ohnehin vorhandenen Anschlussmuffe 5 des Anschlussstückes 4 verbinden oder andererseits über eine weitere Leitung (die Anschlussmuffe 15 und/oder den Abzweig 16) mit dem Innenraum des Einweg-Kegs 1 in Verbindung bringen. Folglich lassen sich verschiedene Verbindungsmöglichkeiten realisieren, die auf ohnehin vorhandene Auslässe (Anschlussmuffe 5) oder Leitungen (Rohr 6 bzw. Produktleitung) zurückgreifen oder mit Hilfe eines zusätzlichen Anschlusses (Anschlussmuffe 15; Abzweig 16) die Kopplung der Unterdruckeinrichtung 9 mit dem Inneren des Einweg-Kegs 1 sicherstellen. Selbstverständlich ist auch eine Kombination dieser Varianten denkbar und wird von der Erfindung umfasst.

Schließlich liegt es noch im Rahmen der Erfindung, die Öffnung 2 des Einweg-Kegs 1 nach der Evakuierung zu verschließen. Denkbar ist es hier, eine Siegelfolie, eine Membran, einen Schraub- oder Bajonettverschluss aufzubringen. Zu diesem Zweck kann das Anschlussstück 4 mit entsprechenden und im Detail nicht dargestellten Einrichtungen ausgerüstet werden. Jedenfalls sorgt dieser Verschluss dafür, dass das Einweg-Keg 1 gasdicht nach seiner Evakuierung an seiner Öffnung 2 abgeschlossen ist und folglich die durch die Evakuierung erreichte zusammengefaltete Form bis zur Entsorgung beibehält.

## Patentansprüche

1. Verfahren zur Reduzierung des Volumens von Einweg-Behältern (1) für flüssige Lebensmittel, Insbesondere von Einweg-Getränkebehältem (1), wobei eine Unterdruckelmrichtung (9) über ein Anschlussstück (4) und einen dortigen auswechselbaren Adapterzwischenstückes (11) an eine Öffnung (2) des Einweg-Behälters (1) angeschlossen wird und dieser zu seiner volumenreduzierung evakuiert wird, **dadurch gekennzeichnet, dass** das Anschlussstück (4) ein Zapfkopf ist, der auch zur Abgabe des flüssigen Lebensmittels aus den Einweg-Behälter (1) während eines Zapfbetriebes verwendbar ist.

2. Verfahren nach Anspruch 1, **dadurch gekennzeichnet, dass** das Adapterzwischenstück (11) zusammen mit einem Anschlussstück (4) für den Verschluss der Öffnung (2) sorgt.

3. Verfahren nach Anspruch 1 oder 2, **dadurch gekennzeichnet, dass** die Öffnung (2) des Einweg-Behälters (1) nach seiner Evakuierung beispielsweise durch eine Membran verschlossen wird.

4. Verfahren nach einem der Ansprüche 1 bis 3, **dadurch gekennzeichnet, dass** die Unterdruckeinrichtung (9) mittels eines Sensors (13) gesteuert wird, welcher den im Einweg-Behälter (1) vorhandenen (Unter-) Druck erfasst.

5. Vorrichtung zur Reduzierung des Volumens von Einweg-Behältern (1) für flüssige Lebensmittel, insbesondere von Einweg-Getränkebehältern (1), mit einer mit dem Innenraum des Einweg-Behälters (1) zumindest zeitweise über ein Anschlussstück (4) verbundenen Unterdruckeinrichtung (9), welche den Einweg-Behälter (1) zu seiner Volumenreduzierung evakuiert, wobei die Unterdruckeinrichtung (9) über Anschlüsse (6, 15) mit dem Anschlussstück (4) verbunden Ist, **dadurch gekennzeichnet, dass** das Anschlussstück (4) ein Zapfkopf ist, der auch zur Abgabe des flüssigen Lebensmittels aus den Einweg-Behälter (1) währen eines Zapfbetriebes verwendbar ist und Anschlüsse (5, 6) zur Abgabe des flüssigen Lebensmittels aus den Einweg-Behälter (1) und zum Zuführen eines Druckgases In den Einweg-Behälter (1) wahren des Zapfbetriebes aufweist.

6. Vorrichtung nach Anspruch 5, **dadurch gekennzeichnet, dass** es sich bei dem Anschlussstück (4) um einen Zapfkopf für Einweg-Kegs handelt.

7. Vorrichtung nach Anspruch 5 oder 6, **dadurch gekennzeichnet, dass** die Unterdruckeinrichtung (9) mittels eines auswechselbaren Adapterzwischenstückes (11) an die Öffnung (2) angeschlossen ist.

8. Vorrichtung nach Anspruch 7, **dadurch gekennzeichnet, dass** das Adopterzwischenstück (11) zusammen mit dem Anschlussstück (4) an einen Flansch (3) in der Öffnung (2) des Einweg-Behälters (1) angeschlossen ist.

9. Vorrichtung nach Anspruch 7 oder 8, **dadurch gekennzeichnet, dass** das Adapterzwischenstück (11) mittels einer Kupplung (12) auswechselbar mit dem Anschlussstück (4) und/oder dem Flansch (3) verbunden ist.

10. Vorrichtung nach einem der Ansprüche 5 bis 9, **dadurch gekennzeichnet, dass** ein Sensor (13) im Bereich der Öffnung (2) des Einweg-Behälters (1) vorgesehen ist, um den im Einweg-Behälter (1) vorhandenen (Unter-)Druck zu messen.

11. Vorrichtung nach einem der Ansprüche 5 bis 10, **dadurch gekennzeichnet, dass** der Sensor (13) an eine Steuerungsanlage (14) angeschlossen ist, welche nach Maßgabe von Sensorsignalen die Unterdruckeinrichtung (9) entsprechend beaufschlagt.

## Claims

1. Method for reducing the volume of disposable containers (1) for liquid foods, particularly disposable beverage containers (1), wherein a negative pressure device (9) is connected via a connection piece (4) and a local replaceable intermediate adapter piece (11) to an opening (2) of the disposable container (1) and said disposable container is evacuated in order to reduce its volume, **characterised in that** the connection piece (4) is a tap head that can also be used for dispensing the liquid food from the disposable container (1) during a tapping operation.

2. Method according to claim 1, **characterised in that** the intermediate adapter piece (11) together with a connection piece (4) ensures the closure of the opening (2).

3. Method according to claim 1 or 2, **characterised in that** the opening (2) of the disposable container (1) is closed after its evacuation, for example by a membrane.

4. Method according to any one of the claims 1 to 3, **characterised in that** the negative pressure device (9) is controlled by means of a sensor (13) which senses the (negative) pressure that exists in the disposable container (1).

5. Device for reducing the volume of disposable containers (1) for liquid foods, particularly disposable beverage containers (1), with a negative pressure device (9) at least intermittently connected via a connection piece (4) with the interior of the disposable container (1), said negative pressure device evacuating the disposable container (1) in order to reduce its volume, wherein the negative pressure device (9) is connected via connections (6, 15) with the connection piece (4), **characterised in that** the connection piece (4) is a tap head that can also be used for dispensing the liquid food from the disposable container (1) during a tapping operation and has connections (5, 6) for dispensing the liquid food from the disposable container (1) and for supplying a pressurised gas into the disposable container (1) during the tapping operation.

6. Device according to claim 5, **characterised in that** the connection piece (4) is a tap head for disposable kegs.

7. Device according to claim 5 or 6, **characterised in that** the negative pressure device (9) is connected to the opening (2) by means of a replaceable intermediate adapter piece (11).

8. Device according to claim 7, **characterised in that** the intermediate adapter piece (11) together with the connection piece (4) is connected to a flange (3) in the opening (2) of the disposable container (1).

9. Device according to claim 7 or 8, **characterised in that** the adapter piece (11) is connected replaceably, by means of a coupling (12), with the connection piece (4) and/or the flange (3).

10. Device according to any one of the claims 5 to 9, **characterised in that** a sensor (13) is provided in the area of the opening (2) of the disposable container (1), in order to measure the (negative) pressure that exists in the disposable container (1).

11. Device according to any one of the claims 5 to 10, **characterised in that** the sensor (13) is connected to a control system (14) which, according to sensor signals, correspondingly charges the negative pressure device (9).

## Revendications

1. Procédé servant à réduire le volume de récipients non consignés (1) pour des aliments liquides, en particulier de récipients à boisson non consignés (1), sachant qu'un dispositif à vide (9) est raccordé à un orifice (2) du récipient non consigné (1) par l'intermédiaire d'une pièce de raccordement (4) et d'une pièce intermédiaire adaptatrice (11) interchangeable à cet endroit, et sachant que l'air est évacué dudit récipient non consigné afin de l'amener à un volume réduit, **caractérisé en ce que** la pièce de raccordement (4) est une tête distributrice qui peut également être utilisée pour délivrer les aliments liquides en provenance du récipient non consigné (1) en mode de fonctionnement.

2. Procédé selon la revendication 1, **caractérisé en ce que** la pièce intermédiaire de raccordement adaptatrice (11) sert conjointement avec une pièce de raccordement (4) à obturer l'orifice (2).

3. Procédé selon la revendication 1 ou 2, **caractérisé en ce que** l'orifice (2) du récipient non consigné (1) est obturé par exemple par une membrane, après que l'air a été évacué du récipient non consigné.

4. Procédé selon l'une quelconque des revendications 1 à 3, **caractérisé en ce que** le dispositif à vide (9) est commandé au moyen d'un capteur (13), qui détecte la pression/dépression présente dans le récipient non consigné (1).

5. Dispositif servant à réduire le volume de récipients non consignés (1) pour des aliments liquides, en particulier de récipients à boisson non consignés (1), comportant un dispositif à vide (9) relié à l'espace intérieur du récipient non consigné (1) au moins par période par l'intermédiaire d'une pièce de raccordement (4), lequel dispositif à vide évacue l'air du récipient non consigné (1) aux fins de la réduction du volume de ce dernier, sachant que le dispositif à vide (9) est relié par l'intermédiaire de raccordements (6, 15) à la pièce de raccordement (4), **caractérisé en ce que** la pièce de raccordement (4) est une tête distributrice, qui peut être utilisée également pour délivrer des aliments liquides en provenance du récipient non consigné (1) en mode de fonctionnement et présente des raccordements (5, 6) destinés à délivrer des aliments liquides en provenance du récipient non consigné (1) et destinés à amener le gaz de pression dans le récipient non consigné (1) en mode de fonctionnement.

6. Dispositif selon la revendication 5, **caractérisé en ce que** la pièce de raccordement (4) est une tête distributrice pour des barils à usage unique.

7. Dispositif selon la revendication 5 ou 6, **caractérisé en ce que** le dispositif à vide (9) est raccordé à l'orifice (2) au moyen d'une pièce de raccordement adaptatrice (11) interchangeable.

8. Dispositif selon la revendication 7, **caractérisé en ce que** la pièce intermédiaire adaptatrice (11) est raccordée conjointement avec la pièce de raccordement (4) à une bride (3) dans l'orifice (2) du récipient non consigné (1).

9. Dispositif selon la revendication 7 ou 8, **caractérisé en ce que** la pièce intermédiaire adaptatrice (11) est reliée de manière interchangeable à la pièce de raccordement (4) et/ou à la bride (3) au moyen d'un couplage (12).

10. Dispositif selon l'une quelconque des revendications 5 à 9, **caractérisé en ce qu'**un capteur (13) est prévu dans la zone de l'orifice (2) du récipient non consigné (1), afin de mesurer la pression/dépression présente dans le récipient non consigné (1).

11. Dispositif selon l'une quelconque des revendications 5 à 10, **caractérisé en ce que** le capteur (13) est raccordé à une installation de commande (14), qui en fonction des signaux du capteur alimente de manière correspondante le dispositif à vide (9).
